# EUROPÄISCHE PATENTANMELDUNG

(11) **EP 1 502 779 A1**
(43) Veröffentlichungstag der Anmeldung: **02.02.2005**
(21) Anmeldenummer: 04017134.0
(22) Anmeldetag: 21.07.2004
(51) Int. Cl.: B60G 17/052, B60G 17/015

(54) **Aktives Federsystem für eine Radaufhängung**

(30) Priorität: 30.07.2003 DE 10334709
(71) Anmelder: DaimlerChrysler AG, 70567 Stuttgart (DE)
(72) Erfinder: Woll, Teddy, Dr., 71229 Leonberg (DE)

(57) **Zusammenfassung**

Die Erfindung bezieht sich auf ein aktives Federsystem eines Kraftfahrzeugs, das sich zur Vereinfachung der Beladung des Kraftfahrzeugs dazu verwenden lässt, den Abstand 7 des Fahrzeugrahmens 2 gegenüber der Fahrbahnoberfläche 3 zu reduzieren. Hierzu wird die Länge 4.1 der jeweiligen aktiven Federelemente 4 reduziert. Dies erfolgt durch die Veränderung des Hydraulikvolumens im Federelement 4, das durch die automatische Regelung 1 des aktiven Federsystems veränderbar ist. Mit einem manuellen Bedienteil 5 wird die automatische Regelung 1 ausschließlich in der Parkstellung des Kraftfahrzeugs derart angesteuert, dass sich die Länge 4.1 des Federelementes 4 verkürzt.

## Beschreibung

Die Erfindung betrifft ein aktives Federsystem für eine Radaufhängung eines Kraftfahrzeugs mit einer automatischen Regelung für eine Niveauverstellung der Radaufhängung mit mindestens einem über ein Steuerglied in Abhängigkeit vom Beladeund/oder Beschleunigungszustand des Kraftfahrzeugs in seiner Länge verstellbaren Stoßdämpfer.

Es ist bereits eine Steuervorrichtung zur Niveauregelung eines Kraftfahrzeugs aus der DE 41 31 077 C2 bekannt. Diese Steuervorrichtung weist Radaufhängungen auf der rechten und linken Fahrzeugseite auf, von denen jeder eine Fluidkammer zugeordnet ist und über welche sich durch eine Fluidversorgungsquelle die Fahrzeughöhe auf einer Fahrzeugseite verändern lässt. Hierzu wird die Fluidzu- und -abfuhr über Steuerventile geregelt. Mehrere Sensoren erfassen die Fahrzeughöhe auf der rechten und linken Fahrzeugseite und die Parkstellung des Fahrzeugs. Einer Steuereinheit werden die Signale der Sensoren zugeführt. Wenn die Differenz der Fahrzeughöhen zwischen der rechten und der linken Fahrzeugseite einen bestimmten Wert überschreitet, wird das Niveau des Kraftfahrzeugs in der Parkstellung über die Fluidkammern wieder in Richtung der Waagrechten gebracht.

Der Erfindung liegt die Aufgabe zugrunde, ein aktives Federsystem für eine Radaufhängung eines Kraftfahrzeugs derart auszubilden und anzuordnen, dass das System mit einfachen Mitteln eine vielfältigere individuelle Fahrwerkseinstellung ermöglicht.

Gelöst wird die Aufgabe erfindungsgemäß dadurch, dass die automatische Regelung über eine Steuerleitung zumindest indirekt mit zumindest einem Bedienteil verbunden ist und die Länge des Stoßdämpfers mittels des Bedienteils verstellbar ist, wobei eine Änderung der Länge des Stoßdämpfers eine Änderung eines Abstands eines Fahrzeugrahmens zu einer Fahrbahnoberfläche bewirkt.

Hierdurch wird erreicht, dass individuell, ohne eine Auswertung von Parametern des Belade- oder Beschleunigungszustandes mit einfachen Mitteln das Niveau des Fahrzeugrahmens verstellt werden kann. Diese Art der manuellen Niveauregelung ist sowohl bei hydraulischen, pneumatischen als auch bei pneumatisch-hydraulischen Stoßdämpfern einsetzbar. Der manuelle Eingriff über das Bedienteil in die automatische Regelung ermöglicht mit einfachen Mitteln eine vielfältigere individuelle Fahrwerkseinstellung des Kraftfahrzeugs.

Um das Niveau des Kraftfahrzeugs zu verändern, ist das Bedienteil über eine Steuerleitung mit der automatischen Regelung verbunden. Der Schaltzustand des Bedienteils wird als Steuersignal oder als elektrische Stellgröße der automatischen Regelung zugeführt und von dieser verarbeitet. Über die automatische Regelung und das Steuerglied werden der oder die jeweiligen Stoßdämpfer in der Länge verstellt.

Hierzu ist es vorteilhaft, dass das Bedienteil mindestens zwei Einstellstufen aufweist, wobei jeder Einstellstufe ein bestimmter Betrag einer Länge des Stoßdämpfers und/oder eines Abstandes des Fahrzeugrahmens zur Fahrbahnoberfläche zugeordnet ist. Dadurch wird eine einfache, aber konkrete Zuordnung der Einstellstufen erreicht, die mehrere individuelle Einstellungen ermöglicht. Das Bedienteil, das beispielsweise als einfacher Drehschalter ausgebildet ist, stellt somit ein einfach bedienbares Mittel dar, um das Niveau des Fahrzeugs zu verändern. Eine erste Einstellstufe ist dem Fahrbetrieb und eine zweite Einstellstufe ist der Parkstellung des Kraftfahrzeugs zugeordnet.

Eine zusätzliche Möglichkeit ist gemäß einer Weiterbildung, dass das Bedienteil über eine Steuerleitung direkt mit dem Steuerglied der automatischen Regelung verbunden ist. Dadurch ist es bei entsprechender Ausbildung des Steuerglieds möglich, die automatische Regelung zu umgehen und dadurch eine einfachere Verstellung des Stoßdämpfers zu bewirken. Hierzu weist das Steuerglied einen Regelkreis auf, der zumindest einen Zustandsparameter des Stoßdämpfers berücksichtigt.

Ferner ist es vorteilhaft, dass bezüglich einer Längsachse des Kraftfahrzeugs zwei zumindest einer Seite zugeordnete Stoßdämpfer um den gleichen Betrag in der Länge verstellbar sind. Dadurch wird erreicht, dass beispielsweise beim Beladen eines Dachgepäckträgers die Karosserie einseitig gesenkt werden kann, um das Beladen zu vereinfachen. Hierzu sind zwei Einstellstufen am Bedienteil notwendig. Beide Einstellstufen sind der Parkstellung des Kraftfahrzeugs zugeordnet.

Eine weitere Komfortsteigerung wird dadurch erreicht, dass zwei zumindest einer Radachse des Kraftfahrzeugs zugeordnete Stoßdämpfer um den gleichen Betrag in der Länge verstellbar sind. Dadurch wird erreicht, dass beispielsweise beim Beladen eines Kofferraums die Karosserie heckseitig gesenkt werden kann, um das Beladen zu erleichtern. Ein solches Neigen des Fahrzeugrahmens kann hilfreich sein, um als Rollstuhlfahrer vom Heckbereich in das Fahrzeug zu gelangen. Diese beiden Einstellstufen des Bedienteils sind ebenfalls der Parkstellung des Kraftfahrzeugs zugeordnet.

Gemäß einer bevorzugten Ausführungsform der erfindungsgemäßen Lösung ist schließlich vorgesehen, dass mittels einer Einstellstufe des Bedienteils die Länge eines ersten Stoßdämpferpaares auf ein Minimum und/oder die Länge eines zweiten Stoßdämpferpaares auf ein Maximum verstellbar ist. Das jeweilige Stoßdämpferpaar ist beispielsweise einer Radachse oder einer Fahrzeugseite zugeordnet. Dadurch wird die zuvor beschriebene seitliche oder heckgerichtete Neigung des Kraftfahrzeugs zum Beladen verstärkt und der Komfort verbessert.

Von besonderer Bedeutung ist für die vorliegende Erfindung, dass der Stoßdämpfer über das Bedienteil ausschließlich in einer von der Regelung erkennbaren Parkstellung des Kraftfahrzeugs in seiner Länge verstellbar ist. Eine derartige Sicherheitsmaßnahme verhindert den individuellen Eingriff in die automatische Regelung des aktiven Federsystems einer Radaufhängung während des Betriebs des Kraftfahrzeugs.

Im Zusammenhang mit der erfindungsgemäßen Ausbildung und Anordnung ist es von Vorteil, dass das Bedienteil beim Verlassen der Parkstellung durch die automatische Regelung deaktiviert wird. Dadurch wird eine Möglichkeit geschaffen, den individuellen Eingriff in die automatische Steuerung aus sicherheitstechnischen Gründen während des Betriebs des Kraftfahrzeugs zu verhindern. Ferner wird der Eingriff in die automatische Regelung wesentlich vereinfacht, da die dynamische Regelung der Fahrwerkaufhängung in der Parkposition nicht geregelt oder abgestimmt werden muss.

Vorteilhaft ist es ferner, dass das Bedienteil als elektrisches oder elektronisches Schaltelement ausgebildet ist, das bezogen auf das aktive Federsystem zusätzlich zu der oder den Einstellstufen weitere Schaltzustände aufweist. Dadurch ist es möglich, ein beispielsweise dem aktiven Federsystem zugeordnetes Schaltelement zum Abstimmen des Fahrwerks auf eine sportliche Fahrweise mit dem Bedienteil zur individuellen Niveauregelung in der Parkstellung zu kombinieren.

Vorteilhaft ist es hierzu auch, dass das Bedienteil als direkt von Hand bedienbarer Schalter im Konsolenbereich und/oder als indirekt bedienbarer Schalter im Karosseriebereich an einer oder mehreren Türen oder Klappen vorgesehen ist. Dadurch wird erreicht, dass beispielsweise beim Öffnen der Heckklappe das Fahrzeug an der Heckachse gesenkt wird, um das Beladen zu vereinfachen. Ebenso besteht die Möglichkeit, das Bedienteil der Fahrertür zuzuordnen, um die Fahrerseite des Kraftfahrzeugs zum Ein- und Aussteigen zu heben.

Weitere Vorteile und Einzelheiten der Erfindung sind in den Patentansprüchen und in der Beschreibung erläutert und in den Figuren dargestellt.

Dabei zeigen:
- Fig. 1: zwei zueinander um eine Querachse verdreht angeordnete Fahrzeugebenen;
- Fig. 2: zwei zueinander um eine Längsachse verdreht angeordnete Fahrzeugebenen;
- Fig. 3: den Prinzipaufbau eines Stoßdämpfers mit einer automatischen Steuerung und einem Bedienteil.

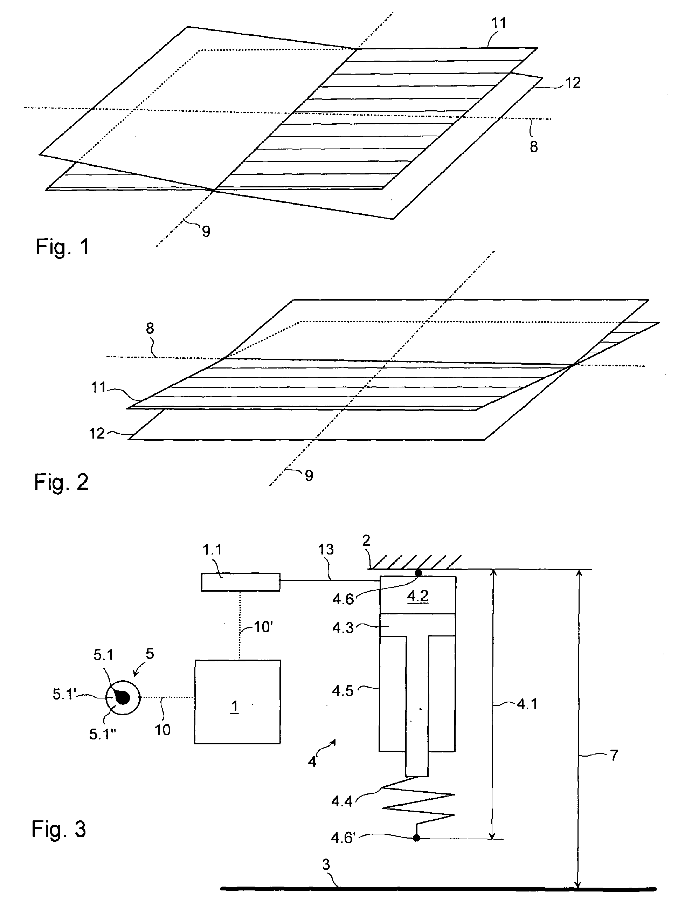

Der Gegenstand der Erfindung bezieht sich auf eine Einrichtung, die es ermöglicht, ein Kraftfahrzeug in Parkstellung gegenüber einer Längsachse 8 oder einer Querachse 9 zu neigen. Diesbezüglich sind in den Figuren 1 und 2 zwei Ebenen 11, 12 dargestellt. Die Ebenen 11, 12 charakterisieren die Neigung eines auf ebenem Untergrund stehenden Kraftfahrzeugs. Die Fahrzeugebene 12 ist bezüglich einer waagrechten Fahrzeugebene 11 geneigt angeordnet.

Gemäß Figur 1 schneiden sich die beiden Ebenen 11, 12 in einer Querachse 9. Die Querachse 9 charakterisiert eine vieler möglicher Achsen eines Kraftfahrzeugs, um die sich das Kraftfahrzeug neigen kann. Die Querachse 9 ist in diesem Ausführungsbeispiel in Längsrichtung des Kraftfahrzeugs im mittleren Bereich angeordnet. In einem nicht dargestellten Ausführungsbeispiel ist die Querachse 9 im Front- oder Heckbereich des Kraftfahrzeugs angeordnet.

In Figur 2 ist die Ebene 12 bezüglich einer Längsachse 8 gegenüber der waagrechten Fahrzeugebene 11 geneigt dargestellt. Die Längsachse 8 charakterisiert eine vieler möglicher Achsen eines Kraftfahrzeugs, um die sich das Kraftfahrzeug auf eine der beiden Seiten neigen kann. Die Längsachse 8 ist bezüglich der Ausrichtung zur rechten und linken Fahrzeugseite in diesem Ausführungsbeispiel im mittleren Bereich angeordnet. In einem weiteren nicht dargestellten Ausführungsbeispiel ist die Längsachse 8 weiter außen am Kraftfahrzeug angeordnet.

Welche Ausrichtung die Geraden 8, 9 haben, in denen sich die beiden Ebenen 11, 12 schneiden können, hängt vom jeweiligen Kraftfahrzeug und dessen Fahrwerk ab. Die Geraden 8, 9 können auch quer zur Fahrzeuglängsachse ausgerichtet sein.

In Figur 3 ist der Prinzipaufbau eines Stoßdämpfers 4 eines aktiven Federsystems mit einer automatischen Steuerung 1 und einem Bedienteil 5 beispielhaft dargestellt. Um einen Fahrzeugrahmen 2 in Parkstellung zu neigen, wird bevorzugt ein Paar solcher Stoßdämpfer 4 gleichzeitig in ihrer Länge 4.1 verstellt.

Der Stoßdämpfer 4 weist vereinfacht dargestellt einen Zylinder 4.5, ein im Zylinder 4.5 mittels eines Kolbens 4.3 gebildetes Volumen 4.2 und ein Federelement 4.4 auf. Der Zylinder 4.5 ist an einem Lagerpunkt 4.6 am Fahrzeugrahmen 2 gelagert. Auf der dem Lagerpunkt 4.6 gegenüberliegenden Seite des Stoßdämpfers 4 ist der Stoßdämpfer 4 über einen Lagerpunkt 4.6' an einer nicht dargestellten Radaufhängung befestigt. Durch das Volumen 4.2, das im einfachsten Falle als Gas- oder Hydraulikvolumen gebildet ist, und das Federelement 4.4 wird ein gedämpftes Federsystem gebildet.

Das mit einem nicht dargestellten Mess- und Regelsystem gebildete aktive Federsystem für die Radaufhängung des Kraftfahrzeugs weist eine automatische Regelung 1 auf. Mit Hilfe der automatischen Regelung 1 wird das System an verschiedene Fahrsituationen angepasst. Hierzu wird das Volumen 4.2 sowohl in der Größe als auch in der Dämpfung durch ein Steuerglied 1.1 während des Betriebs des Kraftfahrzeugs verändert. Das Steuerglied 1.1 ist über eine Druckmittelleitung 13 entsprechend mit dem Volumen 4.2 in Durchflussverbindung und ist über eine Steuerleitung 10' mit der automatischen Regelung 1 verbunden.

In Parkstellung des Kraftfahrzeugs weist der Stoßdämpfer 4 eine Länge 4.1 auf. Aus der Länge 4.1 resultiert ein Abstand 7 des Fahrzeugrahmens 2 zu einer Fahrbahnoberfläche 3.

Zum Neigen des Niveaus des Fahrzeugrahmens 2 gegenüber der Fahrbahnoberfläche 3 wird das Volumen 4.2 im Zylinder 4.5 des Stoßdämpfers 4 reduziert. Hierzu ist die automatische Regelung 1 über eine Steuerleitung 10 mit einem Bedienteil 5 verbunden. Das Bedienteil 5 ist als elektrischer Schalter ausgebildet und weist drei Einstellstufen 5.1, 5.1', 5.1'' auf.

In der Einstellstufe 5.1 arbeitet das aktive Federsystem für die Radaufhängung des Kraftfahrzeugs in der für den Fahrbetrieb vorgesehenen Weise.

Mit der Einstellstufe 5.1' wird die automatische Regelung 1 durch den manuellen Eingriff beeinflusst. Dies setzt voraus, dass sich das Kraftfahrzeug in einer Parkstellung befindet. Dieser Zustand wird von der automatischen Regelung 1 erkannt.

In der Einstellstufe 5.1' ist der Fahrzeugrahmen 2 des Kraftfahrzeugs beispielsweise auf der Fahrerseite geneigt, um einen Dachgepäckträger einfacher zu beladen. Hierzu wird das Volumen 4.2 beider auf der Fahrerseite angeordneter Stoßdämpfer 4 reduziert.

Mit einer weiteren Einstellstufe 5.1'' lässt sich der Fahrzeugrahmen 2 im Heckbereich senken. Hierzu werden die beiden einer nicht dargestellten Heckachse zugeordneten Stoßdämpfer 4 angesteuert und das Volumen 4.2 reduziert. Die beiden Einstellstufen 5.1', 5.1'' können in beliebiger Weise kombiniert werden.

Mit dem Verlassen der Parkstellung wird unabhängig der Stellung des Bedienteils die manuelle Steuerung deaktiviert und das aktive Federsystem für die Radaufhängung des Kraftfahrzeugs aktiviert.

Die beschriebene manuelle Beeinflussung des aktiven Federsystems für eine Radaufhängung eines Kraftfahrzeugs lässt sich sehr gut mit einem nicht dargestellten sogenannten Active Body Control System kombinieren. Einem zum Einstellen eines sportlichen Fahrwerks vorgesehenen Bedienteil wird zusätzlich die vorstehend beschriebene Funktion zur manuellen Niveauregelung zugeordnet. Dies vereinfacht und verbilligt das Implementieren eines solchen manuellen Systems in vorhandene automatische Systeme.

Das aktive Federsystem ist in diesem Ausführungsbeispiel sehr vereinfacht beschrieben. Auf die Vielzahl der mess- und regeltechnisch verknüpften Bauteile kommt es zur Erläuterung des vorliegenden Ausführungsbeispiels nicht wesentlich an.

Diese prinziphafte Beschreibung des aktiven Federsystems schließt nicht aus, dass eine manuelle Verstellung der Länge 4.1 des Stoßdämpfers 4 auch über andere, mehrere Regeloder Steuerglieder 1.1 berücksichtigende Maßnahmen erfolgt, die in ihrer Vielfalt nicht zu fassen sind.

## Patentansprüche

1. Aktives Federsystem für eine Radaufhängung eines Kraftfahrzeugs mit einer automatischen Regelung (1) für eine Niveauverstellung der Radaufhängung mit mindestens einem über ein Steuerglied (1.1) in Abhängigkeit vom Beladeund/oder Beschleunigungszustand des Kraftfahrzeugs in seiner Länge (4.1) verstellbaren aktiven Federelement (4),
**dadurch gekennzeichnet,**
**dass** die automatische Regelung (1) über eine Steuerleitung (10) zumindest indirekt mit zumindest einem Bedienteil (5) verbunden ist und die Länge (4.1) des Federelementes (4) mittels des Bedienteils (5) verstellbar ist, wobei eine Änderung der Länge (4.1) des Federelementes (4) eine Änderung eines Abstands (7) eines Fahrzeugrahmens (2) zu einer Fahrbahnoberfläche (3) bewirkt.

2. Vorrichtung nach Anspruch 1,
**dadurch gekennzeichnet,**
**dass** das Bedienteil (5) mindestens zwei Einstellstufen (5.1, 5.1') aufweist, wobei jeder Einstellstufe (5.1, 5.1') ein bestimmter Betrag einer Länge (4.1) des Federelementes (4) und/oder eines Abstandes (7) des Fahrzeugrahmens (2) zur Fahrbahnoberfläche (3) zugeordnet ist.

3. Vorrichtung nach Anspruch 1 oder 2,
**dadurch gekennzeichnet,**
**dass** das Bedienteil (5) über eine Steuerleitung (10) direkt mit dem Steuerglied (1.1) der automatischen Regelung (1) verbunden ist.

4. Vorrichtung nach einem der vorhergehenden Ansprüche,
**dadurch gekennzeichnet,**
**dass** bezüglich einer Längsachse (8) des Kraftfahrzeugs zwei zumindest einer Seite zugeordnete Federelemente (4) um den gleichen Betrag in der Länge (4.1) verstellbar sind.

5. Vorrichtung nach einem der vorhergehenden Ansprüche,
**dadurch gekennzeichnet,**
**dass** zwei zumindest einer Radachse des Kraftfahrzeugs zugeordnete Federelemente (4) um den gleichen Betrag in der Länge (4.1) verstellbar sind.

6. Vorrichtung nach einem der vorhergehenden Ansprüche,
**dadurch gekennzeichnet,**
**dass** mittels einer Einstellstufe (5.1) des Bedienteils (5) die Länge (4.1) eines ersten Stoßdämpferpaares auf ein Minimum und/oder die Länge (4.1) eines zweiten Stoßdämpferpaares auf ein Maximum verstellbar ist.

7. Vorrichtung nach einem der vorhergehenden Ansprüche,
**dadurch gekennzeichnet,**
**dass** das Federelement (4) über das Bedienteil (5) ausschließlich in einer von der Regelung erkennbaren Parkstellung des Kraftfahrzeugs in seiner Länge (4.1) verstellbar ist.

8. Vorrichtung nach einem der vorhergehenden Ansprüche,
**dadurch gekennzeichnet,**
**dass** das Bedienteil (5) beim Verlassen der Parkstellung durch die automatische Regelung (1) deaktiviert wird.

9. Vorrichtung nach einem der vorhergehenden Ansprüche,
**dadurch gekennzeichnet,**
**dass** das Bedienteil (5) als elektrisches oder elektronisches Schaltelement ausgebildet ist, das bezogen auf das aktive Federsystem zusätzlich zu der oder den Einstellstufen (5.1) weitere Schaltzustände aufweist.

10. Vorrichtung nach einem der vorhergehenden Ansprüche,
**dadurch gekennzeichnet,**
**dass** das Bedienteil (5) als direkt von Hand bedienbarer Schalter im Konsolenbereich und/oder als indirekt bedienbarer Schalter im Karosseriebereich an einer oder mehreren Türen oder Klappen vorgesehen ist.
